# EUROPEAN PATENT SPECIFICATION

(11) **EP 4 249 199 B1**
(45) Date of publication and mention of the grant of the patent: **09.07.2025**
(21) Application number: 22163772.1
(22) Date of filing: 23.03.2022
(51) Int. Cl.: B29B 13/00, B29B 17/02, C08J 11/06

(54) **PROCESS FOR DEGASSING RECYCLED POLYOLEFINS**
VERFAHREN ZUR ENTGASUNG VON RECYCELTEN POLYOLEFINEN
PROCÉDÉ DE DÉGAZAGE DE POLYOLÉFINES RECYCLÉES

(43) Date of publication of application: 27.09.2023
(73) Proprietor: QCP Holding B.V., 6161 RE Geleen (NL)
(72) Inventor: Essers, Francois, 6161 RE Geleen (NL); Houtermans, Marc, 6161 RE Geleen (NL)
(74) Representative: LyondellBasell

(56) References cited:
- WO-A1-2013/072035
- WO-A1-2020/245476
- AT-A4- 508 655
- DE-A1- 19 700 416
- US-B2- 9 358 547

## Description

The present invention relates to an improved process for preparing polymer compositions containing a high amount of recycled polypropylene (PP) and polyethylene (PE).

### STATE OF THE ART

The omnipresence of plastic packaging and the importance of environmental policy have led to the increased importance of recycled plastic materials.

The recycling of paper, textiles, glass or metals is already carried out on a large scale, whether by separate collection or by sorting of the recyclate. The recycling of plastic waste and re-use of plastics is also increasing.

Virgin polymer composition replacement is considered to represent the only way forward to solve the global plastic waste problem, to stop the depletion of natural resources, and to facilitate a circular economy.

To date recycled polymer compositions are available, in the form of flakes or granules, that are obtained from the collection of polyolefin packaging, containers or films are available on the market, wherein the polyolefins are present within the recycled polymer composition at a low percentage of between 5-8 wt% and the remaining between 92-95 wt% of the polyolefins are made-up of virgin polyolefins.

Depending on the source of the recycled PE and PP, different contaminants can be present. Especially in post-consumer waste, residual organic components can be present that can have a dominant smell at low ppm. A well-known component present in waste materials is limonene which is very difficult to remove from the recycled polyolefins.

There is a need for an improved process for removing limonene and comparable organic compounds from recycled polyolefin pellets obtained from post consumer waste, such that a recycled polyolefin can be obtained which is odor free or nearly odor free. Prior art processes for degassing polymers are known from documents WO 2020/245476 A1, AT508655 A4 and US 9358547 B2.

The invention therefore relates to a continuous process for degassing recycled polyolefins pellets, comprising the steps of
a. Providing recycled polyolefin pellets comprising at least 5 ppm limonene into a degassing container,
b. Adding steam to the extraction container, optionally comprising between 0 and 60 vol% air, at a temperature between 95 and 125 °C to degas the pellets and obtain degassed recycled polyolefin pellets,
c. Removing degassed recycled polyolefin pellets from the degassing container,
d. Cooling and drying the degassed recycled polyolefin pellets to obtain clean recycled polyolefin particles;
   wherein the average residence time of the recycled polyolefin pellets is between 10 and 300 minutes in the degassing container,
   wherein the weight ratio steam: pellets ranges between 3:1 and 6:1,
   and wherein the headspace of the clean recycled polyolefin pellets contain less than 1 ppm Limonene, as determined with PID, after conditioning for 1 hour at 30 °C.

An advantage of the above process is that an efficient removal of limonene can be achieved, in a relatively short time and in a continuous process. The process can be scaled to large volumes, thereby making it efficient to prepare recycled polyolefins on large scale which are suitable for many different applications where smell is important, for example in bottles and cans for packaging cosmetics or even food. The increase in temperature necessary to reduce residence time increases explosion risks. Replacing part or all of the air with steam will reduce explosion risk to zero. The removed VOC can be captured by condensing the steam. The full steam option enables full recovery of this material.

### Detailed description.

The process relates to the cleaning of recycled polyolefins pellets from volatile organic components (VOC) like limonene. Examples of recycled polyolefins pellets are pellets obtained from recycled polypropylene (rPP) and recycled polyethylene (rPE).

### Recycled Polypropylene (rPP)

The rPP raw material comprises plastic waste, predominantly post-consumer waste (PCW) rPP packaging waste, such as for example detergent and shampoo bottles, dairy pots and meat trays, etc. The rPP raw material waste can be pre-sorted by waste management companies. One suitable rPP source can for example be the waste material collected under the DSD 324 (05-2012) and DSD 324-1 standard (03-2018).

The PP DSD 324 (05-2012) raw material can comprise at least one of the following used, residue-drained, rigid, system-compatible items made of polypropylene, e.g. bottles, cups and trays, incl. secondary components such as lids, labels etc. The PP DSD 324 (05-2012) raw material can comprise a maximum total amount of impurities 6 % by mass. The impurities in the PP DSD 324 (05-2012) raw material can comprise other metal items < 0.5 % by mass, rigid PE items < 1 % by mass, expanded plastics incl. EPS items < 0.5 % by mass, plastic films < 2 % by mass and other residues < 3 % by mass. Further examples of impurities in PP DSD 324 (05-2012) raw material can comprise glass, paper, board, cardboard, composite paper/cardboard materials (e.g. liquid packaging boards), aluminised plastics, other materials (e.g. rubber, stones, wood, textiles, nappies) and compostable waste (e.g. food, garden waste).

A second standard for rPP is the PP DSD 324-1 standard (03-2018). This standard is very comparable to the PP DSD 324 standard discussed above, except that the recycled PP can contain more film material, up to about 10 wt%. This film material comprises both rPP film (such as for example bioriented PP (BOPP)) PE film. The PP DSD 324-1 standard (03-2018) raw material can comprise a maximum total amount of impurities 4 % by mass. The impurities in the PP DSD 324-1 standard (03-2018) raw material can comprise other metal items < 0.5 % by mass, rigid PE items < 1 % by mass, expanded plastics incl. EPS items < 0.5 % by mass, paper, cardboard, carton, composite paper/cardboard materials (e.g. liquid packaging boards) < 1 % by mass, other residues < 3 % by mass. Further examples of impurities in PP DSD 324-1 standard (03-2018) raw material can comprise glass, aluminised plastics, other materials (e.g. rubber, stones, wood, textiles, nappies) and compostable waste (e.g. food, garden waste).

PP is available in three different varieties, PP homopolymers (PPh), PP random copolymer (PPr) and PP impact copolymer (or heterophasic PP copolymer, PPc).

The waste material can for example be characterized as originating from following sources (a) extrusion sheet and film material, mostly PP homopolymers (PPh) and PP random copolymers (PPr), virtually without rubber (such as for example biaxially-oriented polypropylene (BOPP)); and (b) injection moulded material, which are a mix of PP homopolymer (PPh), PP random copolymers (PPr) and impact copolymer (PPc), containing about 15 wt% rubber.

The rPP can contain approximately half of packaging material (BOPP) and half of rubber-containing injection moulded material. This injection moulded material can contain rubbers, such as for example C2-C3 rubber, thermoplastic elastomers (TPE), ethylene propylene diene rubber (EPDM) or ethylene propylene rubber (EPR).

### Recycled Polyethylene (rPE)

The rPE comprises PE waste collected under the DSD 329 standard (04/2009), PE waste based on UK milk bottles, PE waste based on French milk bottles, PE containers having a volume of 5 litres or more and being cleaned in accordance with environmental specifications or PE extrusion pipes. Further PE sources are not excluded.

The PE DSD 329 standard (04/2009) raw material can comprise at least one of the following used, completely emptied, rigid, system-compatible articles made of polyethylene, e.g. bottles and dishes, incl. packaging parts such as caps, lids, labels etc.. The PE DSD 329 standard (04/2009) raw material can comprise a maximum total amount of impurities 6 % by mass. The PE DSD 329 standard (04/2009) raw material can comprise other metal articles < 0.5 mass %, dimensionally stable PP articles < 3 mass %, foamed plastics incl. EPS articles < 0.5 mass %, plastic films < 5 mass % and other residual materials < 3 mass %. Further examples of impurities in recycled PE DSD 329 standard (04/2009) raw material can comprise glass, paper, cardboard, composite paper/cardboard materials (e.g. beverage cartons), aluminised plastics, other materials (e.g. rubber, stones, wood, textiles, nappies) and compostable waste (e.g. food, garden waste).

The rPE preferably comprises recycled High-Density Polyethylene (rHDPE) to at least 90 wt%, more preferably at least 92 wt%, most preferably at least 95 wt%.

The rPE collected according to the DSD 329 standard contains a variety of contaminants which can have a negative effect when used in blow-moulding. These are removed by means of a plurality of steps, including cleaning steps, washing steps and sorting steps. The rPE can for example be split into different streams, such as a film fraction (PE + EPS), a light fraction and a dark fraction. The rPE may preferably comprise 0-6 wt%, more preferably between 1-5 wt%, most preferably between 3-4.5 wt% polypropylene and up to 1 wt% polystyrene contaminants, wherein wt% is relative to the total amount of rPE.

The rPE preferably has a density in the range of approximately 0.94-0.97 g/cm³ and can have different molecular weight distributions. A standard Gaussian distribution of the molecular weight is called 'monomodal'. A specific and broad distribution is called 'bimodal'. The rPE may have an in-between modality of '1.5 x monomodal'.

The MFR of the rPE (2.16 kg, 190 °C) preferably ranges between 0.1-0.5 which is suitable for blow moulding materials. The rPE may be a light recyclate. The rPE preferably has a L* value between 71-80, a* value between -6 to 0 and a b* value between 0-12, as determined on the basis of CIELAB.

The rPE preferably has a MFR 2.16 kg, 230 °C (g/10 min) of between 0.4-0.9, more preferably between 0.45-0.85.

The rPE preferably has an MVR 2.16 kg, 230 °C (ml/10 min) of between 0.3-1.3, more preferably between 0.6-1.0. The rPE preferably has a Charpy (23 °C, kJ/m²) of between 10-20, more preferably between 12-17. The rPE preferably has a density (kg/m³) between 850-1050, more preferably between 900-1000. The rPE preferably has a Tensile modulus (MPa) of between 1030-1230, more preferably between 1080-1180.

The rPP and rPE are obtained from a process comprising shredding the raw collected material, and washing the material.

An example of such a process is mentioned below. The process comprises the steps of
a) treating a polyolefin recyclate with water without added thermal energy;
b) treating the polyolefin recyclate fraction from a) in a washing step with an alkaline medium at a temperature of at least 60 °C;
c) sorting of the polyolefin recyclate obtained from b) obtaining a PE recyclate and/or PP recyclate fraction, wherein steps a) and b) can also be carried out in the reverse order;
d) treating the PE recyclate and/or PP recyclate obtained from the above steps at a temperature in the range of between 50-155 °C, preferably for a period of at least 60 minutes to obtain dried PE recycloate and/or PP recyclate.
e) adding the dried PE recyclate and/or PP recyclate obtained from step d) to an extruder optionally with the addition of the other polymers, wherein the mix is processed to obtain recycled PP and recycled PE pellets.

Step e) can be conducted between 200-250 °C, preferably between 210-240 °C, more preferably between 220-230 °C for between 1-10 minutes.

The pellets containing rPP and rPE typically contain above 5 ppm limonene when derived from the above process. The limonene is not extracted from the pellets from step e) or in the treatment of step d), since it mixes well with the rPP and rPE and has a very low solubility in water.

The inventors have found that the addition of steam having a limited amount of air at a temperature range between 95 and 125 °C is able to degas the recycled polyolefin pellets and obtain degassed recycled polyolefin pellets. The limonene content of the headspace of the degassed recycled polyolefin pellets is preferably lower than 1 ppm, preferably lower than 0.1 ppm (100 ppb).

The limonene content is measured with a miniRAE 3000 limonene measurement, according to an internal method QCPBV014: 350 grams of a sample is added to glass jar having a content of 1000 ml. The sample is aged for 1 hour at 30 °C in the closed jar before performing the VOC measurement. After the aging, the VOC content in the jar is measured by sampling and measuring the air above the pellets ((headspace) with the aid of a photoionization detector calibrated for limonene. A miniREA 3000 is used as PID device. For very low amounts of limonene (typically between 0.1 and 1 ppm) the analysis can be carried out with GCMS, since GCMS has a higher sensitivity at these ranges compared to PID.

Besides the PID measurement a GC-MS headspace measurement was used to analyse more components. A sample of 3 gram of pellets is taken and brought into a vial of 20ml. The jar is conditioned at 120 °C for 120 minutes. After conditioning a GCMS sample is taken from the headspace of the jar and a GCMS measurement is conducted.

The pellets are extracted by steam in the cylindrical degassing container. The size of the container depends on the throughput and VOC content to be achieved. Low smell with a limonene content below 1 ppm can be achieved within 100 minutes residence time. At residence times of 300 minutes the total VOC amount measured by GCMS or PID falls below 0.5 ppm. Based on the results of the pilot scale experiments with 25 kg of material the preferred L/D of the degassing container ranges between 1 and 4, preferably between 1.5 and 3, more preferably between 1.8 and 2.4, or in an embodiment the L/D is about 2. The table below shows the preferred size of the stripping reactor (V = volume, d = diameter, h = height) for rPP or rPE with a bulkdensity of 550 kg/m³. The first column shows the estimated polymer throughput, while the other columns show minimum design geometries of preferred drying columns, as function of drying time. TVOC is total volatile organic compounds content.

**Table 1.**

| **residence time** | **100 min.** | | | **200 min.** | | | **300 min.** | | |
|---|---|---|---|---|---|---|---|---|---|
| | **TVOC < 3 ppm** | | | **TVOC < 1 ppm** | | | **TVOC < 0.5 ppm** | | |
| **Polymer Throughput** | **V [m³]** | **d [m]** | **h [m]** | **V [m³]** | **d [m]** | **h [m]** | **V [m³]** | **d [m]** | **h [m]** |
| **[kg/h]** | | | | | | | | | |
| **500** | 1.5 | 1.0 | 2.0 | 3.0 | 1.2 | 2.5 | 4.5 | 1.4 | 2.9 |
| **1000** | 3.0 | 1.2 | 2.5 | 6.1 | 1.6 | 3.1 | 9.1 | 1.8 | 3.6 |
| **1500** | 4.5 | 1.4 | 2.9 | 9.1 | 1.8 | 3.6 | 13.6 | 2.1 | 4.1 |
| **2000** | 6.1 | 1.6 | 3.1 | 12.1 | 2.0 | 4.0 | 18.2 | 2.3 | 4.5 |
| **2500** | 7.6 | 1.7 | 3.4 | 15.2 | 2.1 | 4.3 | 22.7 | 2.4 | 4.9 |
| **3000** | 9.1 | 1.8 | 3.6 | 18.2 | 2.3 | 4.5 | 27.3 | 2.6 | 5.2 |
| **3500** | 10.6 | 1.9 | 3.8 | 21.2 | 2.4 | 4.8 | 31.8 | 2.7 | 5.5 |
| **4000** | 12.1 | 2.0 | 4.0 | 24.2 | 2.5 | 5.0 | 36.4 | 2.9 | 5.7 |

An extraction container of 30 m³ would enable venting times of 300 minutes up to 3000 kg/h, with VOC levels below 0.5 ppm in the finished product.

The extraction container is configured to receive recycled polyolefin pellets and configured to discharge degassed recycled polyolefin pellets. Further the container contains an inlet for receiving steam and an outlet for discharging VOC and residual steam, which can be condensed in a condenser.

For example the extraction container has a bottom outlet for degassed pellets, a top inlet for receiving recycled polyolefin pellets, a top outlet for steam and VOC and a bottom inlet for the addition of steam. To limit heat loss of the pellets the extraction container can be equipped with for instance a heated jacket.

The addition of recycled polyolefin pellets can take place continuously, or semi continuously, whereby intermittently small batches of material are added to the container. Degassed recycled polyolefin pellets can be discharged continuously from the container or intermittently in small batches.

Typically, the amount of recycled polyolefin pellets containing > 5 ppm limonene to charge to the extraction container ranges between 1000 kg/hour to 10.000 kg/hour. Preferably the amount of recycled polyolefin pellets fed to the extraction container ranges between 500 and 5000 kg/hour.

The temperature of the recycled polyolefin pellets containing >5 ppm limonene can be between ambient temperature (like for example 20 °C) and 135 °C, preferably between 100 and 125 °C, more preferably between 105 and 124 °C, when entering the extraction container.

The advantage of using elevated temperatures of the pellets when added to the degassing container between 100 and 125 °C is that more efficient limonene degassing can be obtained and condensation of steam inside the degassing container can be minimized.

The temperature of the steam when entering the extraction container is typically between 95 and 125 °C, preferably between 100 and 124 °C, or most preferably between 105 and 123 °C.

The steam may contain air. Typically the steam may contain up to 10 vol% air, preferably the amount of air ranges between 0 and 5 vol%, or between 0 and 2 vol%, or between 0.1 and 1 vol%.

The weight ratio of steam to pellets ranges between 3:1 and 6:1. This means that for effective degassing of 1000 kg of recycled polyolefin pellets, comprising at least 5 ppm limonene, between 3000 and 6000 kg of steam is needed. A lower weight ratio of steam to pellets results in a less efficient degassing of recycled polyolefin pellets, while a higher weight ratio of steam to pellets than 6 is not needed in view of efficiency The average residence time of the recycled polyolefin pellets is between 60 and 300 minutes in the extraction container. Short residence times between 60 and 100 minutes are already efficient to lower the limonene content from above 20 ppm to around 3 ppm.

Longer residence times between 200 and 300 minutes are preferred to lower the limonene content to values around 0.1 ppm (100 ppb).

### Figures

Figure 1 degassing of recycled polyolefin pellets as function of degassing medium
Figure 2 shows a GCMS diagram of recycled polyolefin pellets with >5 ppm limonene. The diagram contains more than 40 peaks of different organic volatile components.
Figure 3 shows a GCMS diagram of recycled polyolefin pellets having 1 ppm, after partial degassing; the diagram shows about 10 peaks of different organic volatile components.
Figure 4 shows a GCMS diagram of recycled polyolefin pellets having 0.1 ppm limonene, after degassing; 3 small residual peaks are found in GCMS.
Figure 5 shows the number of chemical substances present in the headspace after drying for a certain amount of time. Fig 5 clearly shows that venting with 120 ⁰C steam quickly reduces the amount of components in the headspace.

### Experimental.

A 60 I degassing container was filled with 25 kg of recycled polyethylene pellets containing about 25 ppm limonene. The pellets were vented using hot air at 2 temperatures, with steam and air, and with steam but no air.

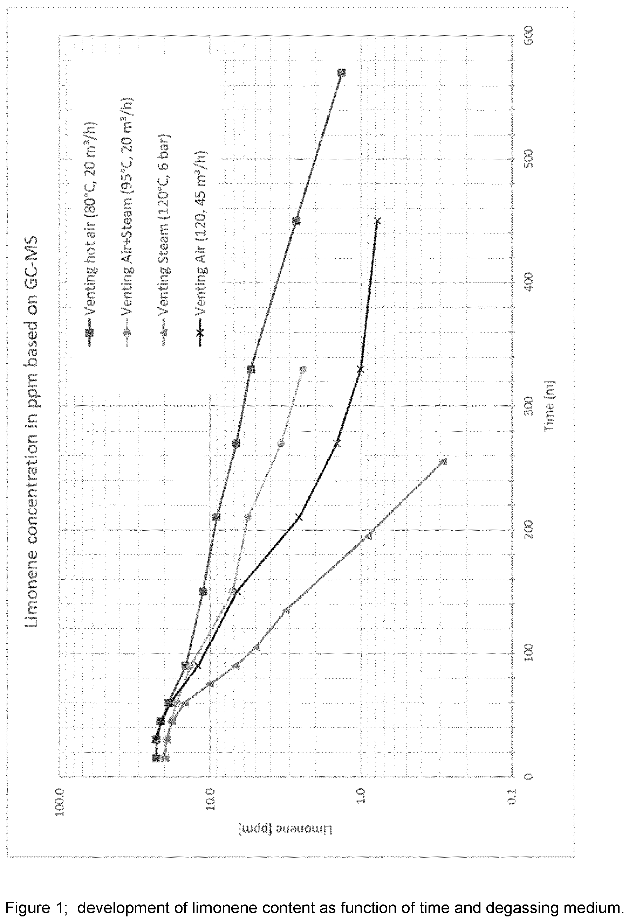

The results are shown in FIG 1 and below table 2.

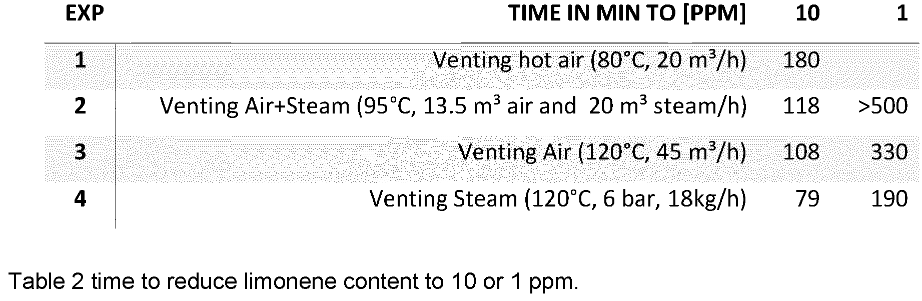

The inventors found that not only the amount of limonene (ppm) is reduced in the process of the invention, but also the number of different volatile compounds is significantly reduced

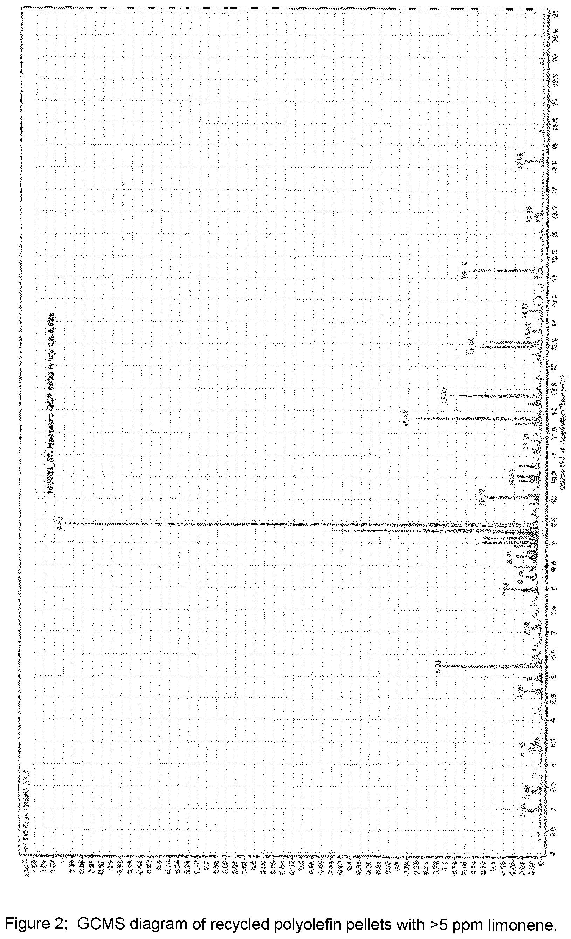

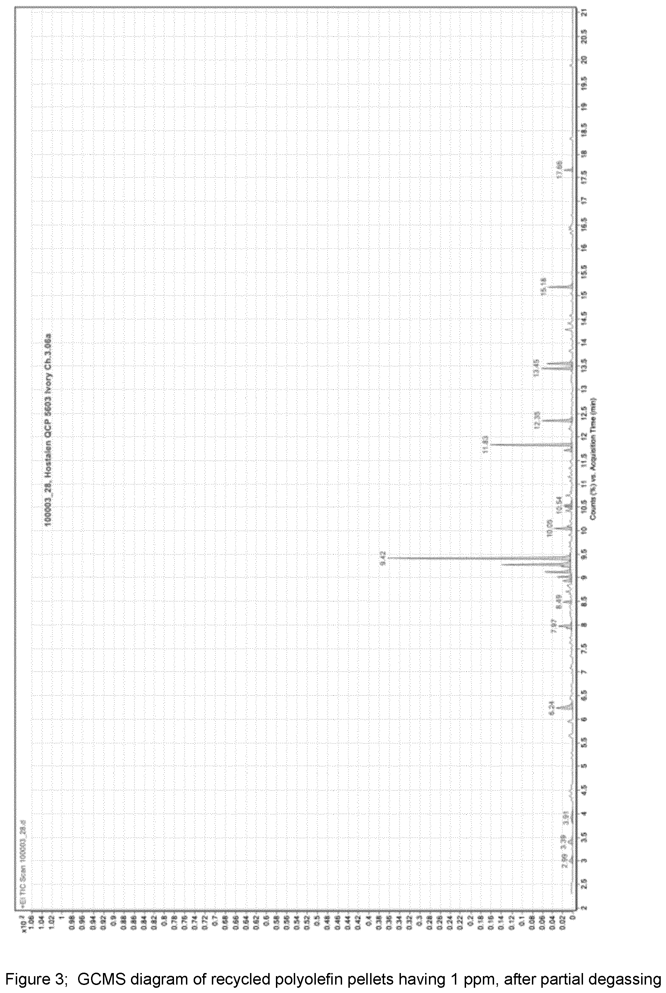

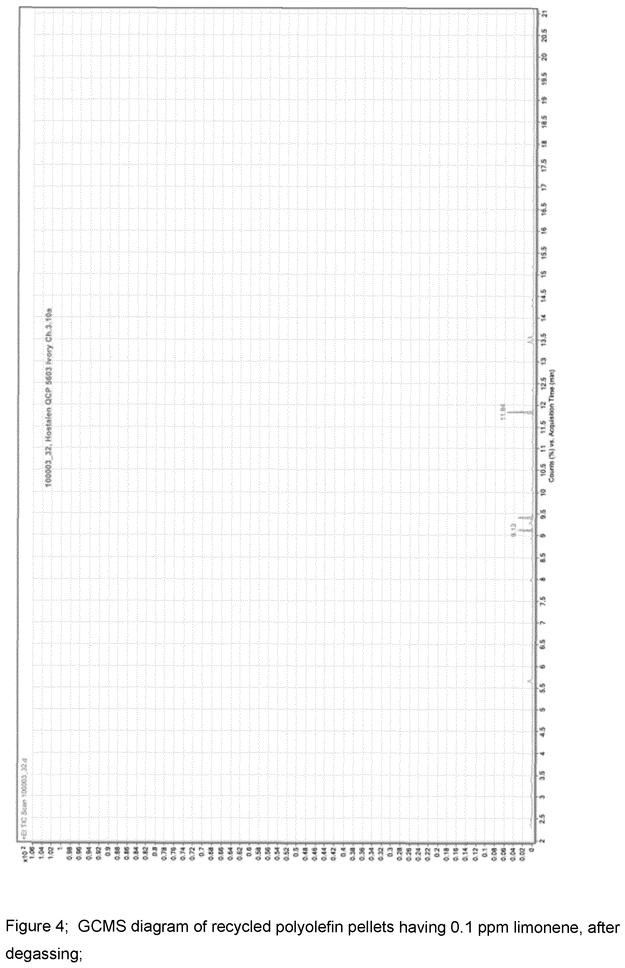

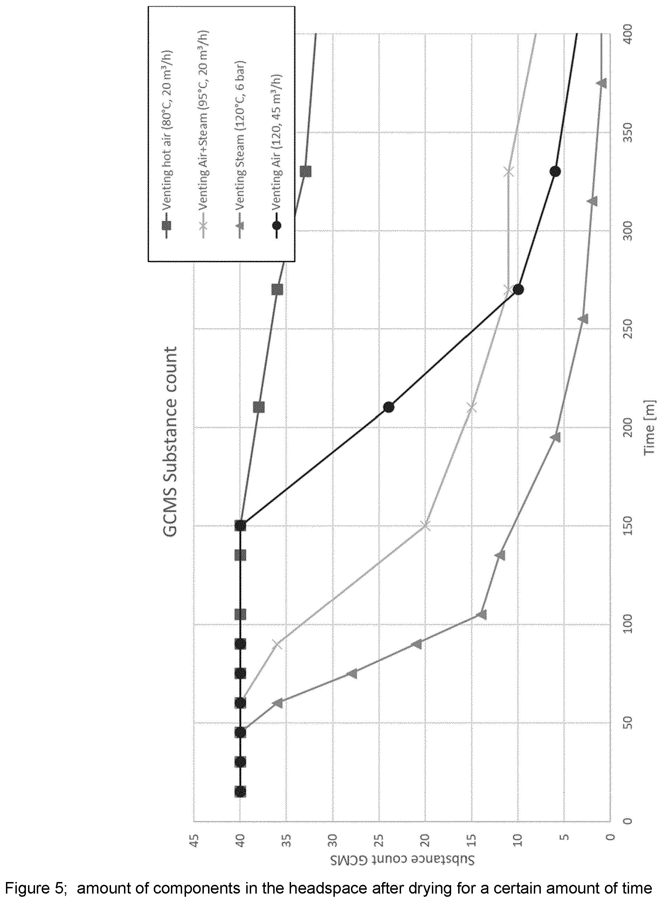

GCMS diagrams are prepared to measure the amount and type of components present (see figures 2-4), a graphical presentation of the amount of substances found can be seen in Figure 5, while the numbers are summarized in table 3.

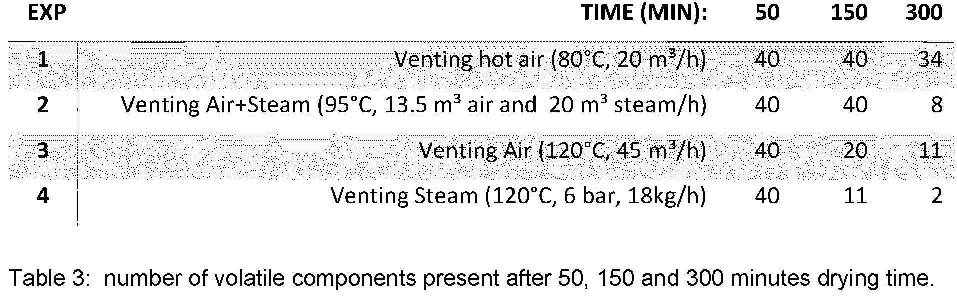

## Claims

1. Continuous process for degassing recycled polyolefins, comprising the steps of
a. Providing recycled polyolefin pellets comprising at least 5 ppm limonene into a degassing container,
b. Adding steam to the extraction container, optionally comprising between 0 and 60 vol% air, at a temperature between 95 and 125 °C to degas the pellets and obtain degassed recycled polyolefin pellets,
c. Removing degassed recycled polyolefin pellets from the degassing container,
d. Cooling and drying the degassed recycled polyolefin pellets to obtain clean recycled polyolefin particles;
wherein the average residence time of the recycled polyolefin pellets is between 10 and 300 minutes in the degassing container,
wherein the weight ratio steam: pellets ranges between 3:1 and 6:1,
and wherein the headspace of the clean recycled polyolefin pellets contain less than 1 ppm Limonene, as determined with PID, after conditioning the recycled polyolefin pellets for 1 hour at 30 ⁰C.

2. Process according to claim 1, wherein the average residence time of the recycled polyolefin pellets ranges between 200 and 300 minutes and wherein the headspace of the clean recycled polyolefin pellets contain less than 100 ppb Limonene.

3. Process according to claims 1 or 2, wherein steam is added to the reactor at a temperature between 105 and 125 °C having less than 5 vol% air, preferably less than 2 vol% air.

4. Process according to claims 1 or 2, wherein steam is added to the reactor at a temperature between 105 and 124 °C having less than 2 vol% air.

5. Process according to any one of the preceding claims, wherein the recycled polyolefins are selected from recycled polypropylene collected under DSD 324 and DSD 324-1 standard and recycled polyethylene collected under DSD 329 standard.

6. Process according to any one of the preceding claims, wherein the recycled polyolefin pellets have a temperature between 100 and 125 °C when entering the extraction container, preferably a temperature between 105 and 124 °C .

7. Process according to anyone of the preceding claims, wherein the amount of recycled polyolefin pellets provided to the reactor is between 3000 and 8000 kg/hour.

8. Process according to any one of the preceding claims, wherein the degassing container is a cylindrical container having a length L and a diameter D, and wherein the L/D ranges between 1.8 and 2.4.

9. Process according to anyone of the preceding claims, wherein the degassed recycled polyolefin pellets are dried and cooled with air, and wherein steam and any volatile organic compounds (VOC) are condensed in a condenser.

## Patentansprüche

1. Kontinuierliches Verfahren zur Entgasung von recycelten Polyolefinen, umfassend die Schritte:
a. Bereitstellen von recycelten Polyolefinpellets, die mindestens 5 ppm Limonen umfassen, an einen Entgasungsbehälter,
b. Zugeben von Wasserdampf zu dem Extraktionsbehälter, der gegebenenfalls zwischen 0 und 60 Vol.% Luft umfasst, mit einer Temperatur zwischen 95 und 125 °C, um die Pellets zu entgasen und entgaste recycelte Polyolefinpellets zu erhalten,
c. Entfernen entgaster recycelter Polyolefinpellets aus dem Entgasungsbehälter,
d. Kühlen und Trocknen der entgasten recycelten Polyolefinpellets, um saubere recycelte Polyolefinpartikel zu erhalten,
wobei die durchschnittliche Verweilzeit der recycelten Polyolefinpellets zwischen 10 und 300 Minuten in dem Entgasungsbehälter liegt,
wobei das Gewichtsverhältnis von Wasserdampf:Pellets im Bereich zwischen 3:1 und 6:1 liegt,
und wobei der Kopfraum der sauberen recycelten Polyolefinpellets weniger als 1 ppm Limonen enthält, bestimmt mittels PID, nachdem die recycelten Polyolefinpellets 1 Stunde bei 30 °C konditioniert wurden.

2. Verfahren nach Anspruch 1, wobei die durchschnittliche Verweilzeit der recycelten Polyolefinpellets im Bereich zwischen 200 und 300 Minuten liegt, und wobei der Kopfraum der sauberen recycelten Polyolefinpellets weniger als 100 ppb Limonen enthält.

3. Verfahren nach den Ansprüchen 1 oder 2, wobei dem Reaktor Wasserdampf mit einer Temperatur zwischen 105 und 125 °C zugegeben wird, der weniger als 5 Vol.% Luft, vorzugsweise weniger als 2 Vol.% Luft aufweist.

4. Verfahren nach den Ansprüchen 1 oder 2, wobei dem Reaktor Wasserdampf mit einer Temperatur zwischen 105 und 124 °C zugefügt wird, der weniger als 2 Vol.% Luft aufweist.

5. Verfahren nach einem der vorhergehenden Ansprüche, wobei die recycelten Polyolefine ausgewählt sind aus recyceltem Polypropylen, das gemäß den Standards DSD 324 und DSD 324-1 gesammelt wurde, und recyceltem Polyethylen, das gemäß dem Standard DSD 329 gesammelt wurde.

6. Verfahren nach einem der vorhergehenden Ansprüche, wobei die recycelten Polyolefinpellets eine Temperatur zwischen 100 und 125 °C haben, wenn sie in den Extraktionsbehälter eintreten, vorzugsweise eine Temperatur zwischen 105 und 124 °C.

7. Verfahren nach einem der vorhergehenden Ansprüche, wobei die Menge an recycelten Polyolefinpellets, die dem Reaktor bereitgestellt wird, zwischen 3000 und 8000 kg/Stunde liegt.

8. Verfahren nach einem der vorhergehenden Ansprüche, wobei der Entgasungsbehälter ein zylindrischer Behälter mit einer Länge L und einem Durchmesser D ist, und wobei das L/D im Bereich zwischen 1,8 und 2,4 liegt.

9. Verfahren nach einem der vorhergehenden Ansprüche, wobei die entgasten recycelten Polyolefinpellets mit Luft getrocknet und gekühlt werden, und wobei Wasserdampf und jegliche flüchtigen organischen Verbindungen (VOC) in einem Kondensatabscheider kondensiert werden.

## Revendications

1. Procédé continu de dégazage de polyoléfines recyclées, comprenant les étapes de
a. fourniture de granulés polyoléfiniques recyclés comprenant au moins 5 ppm de limonène dans un récipient de dégazage,
b. ajout de vapeur au récipient d'extraction, comprenant éventuellement entre 0 et 60 % en volume d'air, à une température située entre 95 et 125 °C afin de dégazer les granulés et d'obtenir des granulés polyoléfiniques recyclés dégazés,
c. retrait des granulés polyoléfiniques recyclés dégazés du récipient de dégazage,
d. refroidissement et séchage des granulés polyoléfiniques recyclés dégazés afin d'obtenir des particules polyoléfiniques recyclées propres;
le temps de séjour moyen des granulés polyoléfiniques recyclés étant situé entre 10 et 300 minutes dans le récipient de dégazage,
le rapport pondéral vapeur:granulés étant situé dans la plage entre 3:1 et 6:1,
et l'espace libre des granulés polyoléfiniques recyclés propres contenant moins de 1 ppm de limonène, tel que déterminé par technologie PID, après conditionnement des granulés polyoléfiniques recyclés pendant 1 heure à 30 °C.

2. Procédé selon la revendication 1, le temps de séjour moyen des granulés polyoléfiniques recyclés étant situé dans la plage entre 200 et 300 minutes et l'espace libre des granulés polyoléfiniques recyclés propres contenant moins de 100 ppb de limonène.

3. Procédé selon les revendications 1 ou 2, de la vapeur étant ajoutée au réacteur à une température située entre 105 et 125 °C, présentant moins de 5 % en volume d'air, de préférence moins de 2 % en volume d'air.

4. Procédé selon les revendications 1 ou 2, de la vapeur étant ajoutée au réacteur à une température située entre 105 et 124 °C, présentant moins de 2 % en volume d'air.

5. Procédé selon l'une quelconque des revendications précédentes, les polyoléfines recyclées étant choisies parmi le polypropylène recyclé collecté sous la norme DSD 324 et la norme DSD 324-1 et le polyéthylène recyclé collecté sous la norme DSD 329.

6. Procédé selon l'une quelconque des revendications précédentes, les granulés polyoléfiniques recyclés présentant une température située entre 100 et 125 °C lors de l'entrée dans le récipient d'extraction, de préférence une température située entre 105 et 124 °C.

7. Procédé selon l'une quelconque des revendications précédentes, la quantité de granulés polyoléfiniques recyclés fournis au réacteur étant située entre 3000 et 8000 kg/heure.

8. Procédé selon l'une quelconque des revendications précédentes, le récipient de dégazage étant un récipient cylindrique présentant une longueur L et un diamètre D et le rapport L/D étant situé dans la plage entre 1,8 et 2,4.

9. Procédé selon l'une quelconque des revendications précédentes, les granulés polyoléfiniques recyclés dégazés étant séchés et refroidis avec de l'air et la vapeur et tous les composés organiques volatils (COV) étant condensés dans un condenseur.
